# EUROPEAN PATENT APPLICATION

(11) **EP 3 068 088 A1**
(43) Date of publication of application: **14.09.2016**
(21) Application number: 13898667.4
(22) Date of filing: 04.12.2013
(51) Int. Cl.: H04L 12/931

(54) **INTERCONNECTION SYSTEM FOR COMMUNICATIONS DEVICE**

(71) Applicant: Huawei Technologies Co., Ltd., Longgang District Shenzhen, Guangdong 518129 (CN)
(72) Inventor: LIU, Changyi, Shenzhen Guangdong 518129 (CN); XIANG, Nengwu, Shenzhen Guangdong 518129 (CN); WU, Kai, Shenzhen Guangdong 518129 (CN)
(74) Representative: Gill Jennings & Every LLP
(86) International application number: PCT/CN2013/088477
(87) International publication number: WO 2015/081506

(57) **Abstract**

Embodiments of the present invention provide an interconnection system for a communications device, and the interconnection system includes: M backplane areas and N backplane extension areas, where the M backplane areas are distributed on K PCB backplanes, and each fabric card connector of a k^{th} backplane area is separately connected to all service board connectors of the k^{th} backplane area by using a PCB backplane in which the k^{th} backplane area is located; each fabric card connector of a k^{th} backplane extension area corresponding to the k^{th} backplane area is connected to all service board connectors of all other backplane extension areas by using a low-dielectric-loss transmission material; each service board connector of the k^{th} backplane extension area is connected to all fabric card connectors of all the other backplane extension areas by using the low-dielectric-loss transmission material. The interconnection system provided by the embodiments of the present invention is a point-to-point interconnection system having a high integration level, a high speed, high bandwidth, and a capability of flexible extension.

## Description

### TECHNICAL FIELD

Embodiments of the present invention relate to the field of communications technologies, and in particular, to an interconnection system for a communications device.

### BACKGROUND

With the popularity and application of intelligent terminals, data traffic of web pages, music, videos, multimedia, and the like increases with each passing day, which causes a continuous increase in demands for high bandwidth transmission. However, a system architecture of an existing communications device is a system architecture in which conventional printed circuit board (Printed Circuit Board, PCB) backplanes are interconnected by using subracks and cabinets. Such a system architecture of interconnection by using subracks and cabinets cannot satisfy requirements of a system for high integration, high bandwidth transmission and flexible system extension.

### SUMMARY

Embodiments of the present invention provide an interconnection system for a communications device, and the interconnection system can satisfy requirements of a system for a high integration level, a high speed, high bandwidth, and a capability of flexible extension.

An embodiment of the present invention provides an interconnection system for a communications device, where the interconnection system includes M backplane areas and N backplane extension areas; the M backplane areas are distributed on K printed circuit board PCB backplanes, a kth backplane area includes at least one fabric card connector and at least one service board connector, and the kth backplane area is any backplane area of the M backplane areas, where the at least one fabric card connector of the kth backplane area is configured to be connected to a kth group of fabric cards, and the at least one service board connector of the kth backplane area is configured to be connected to a kth group of service boards; each fabric card connector of the kth backplane area is separately connected to all service board connectors of the kth backplane area by using a PCB backplane in which the kth backplane area is located; a kth backplane extension area corresponding to the kth backplane area includes at least one fabric card connector, at least one service board connector, and a low-dielectric-loss transmission material, where the at least one fabric card connector of the kth backplane extension area is configured to be connected to the kth group of fabric cards, and the at least one service board connector of the kth backplane extension area is configured to be connected to the kth group of service boards; each fabric card connector of the kth backplane extension area is connected to all service board connectors of all other backplane extension areas by using the low-dielectric-loss transmission material; each service board connector of the kth backplane extension area is connected to all fabric card connectors of all the other backplane extension areas by using the low-dielectric-loss transmission material; M is a positive integer greater than or equal to 2, k is any positive integer less than or equal to M, N is a positive integer greater than or equal to M, K is a positive integer less than or equal to M, each group of fabric cards at least includes one fabric card, and each group of service boards at least includes one service board.

With reference to a first aspect, in a first possible implementation manner, all fabric card connectors and all service board connectors of the kth backplane extension area are fastened on any PCB backplane.

With reference to the first aspect, in a second possible implementation manner, all fabric card connectors and all service board connectors of the kth backplane extension area are fastened on the PCB backplane in which the kth backplane area is located.

With reference to the first aspect, in a third possible implementation manner, all fabric card connectors and all service board connectors of the kth backplane extension area are fastened on a mechanical part.

With reference to the first aspect or any one of the foregoing possible implementation manners, in a fourth possible implementation manner, the kth backplane extension area is located on a left side or right side of the kth backplane area.

With reference to the first aspect or any possible implementation manner of the first possible implementation manner to the third possible implementation manner, in a fifth possible implementation manner, the kth backplane extension area is at least divided into P backplane extension subareas, and the P backplane extension subareas are separately located at two sides of the kth backplane area, where P is a positive integer greater than 1.

With reference to the first aspect or any possible implementation manner of the first possible implementation manner to the third possible implementation manner, in a sixth possible implementation manner, the kth backplane area is at least divided into Q backplane subareas, and the Q backplane subareas are separately located at two sides of the kth backplane extension area, where Q is a positive integer greater than 1.

With reference to the first aspect or any possible implementation manner of the first possible implementation manner to the third possible implementation manner, in a seventh possible implementation manner, the kth backplane extension area is at least divided into P backplane extension subareas, the kth backplane area is divided into at least Q backplane subareas, and a pth backplane extension subarea is located on a left side or right side of a qth backplane subarea, where P and Q are both positive integers greater than 1, p is any positive integer less than or equal to P, and q is any positive integer less than or equal to Q.

With reference to the first aspect or any one of the foregoing possible implementation manners, in an eighth possible implementation manner, the low-dielectric-loss transmission material is a cable or an optical fiber.

The interconnection system for a communications device provided by the invention includes M backplane areas and N backplane extension areas, the M backplane areas are distributed on K PCB backplanes, and each fabric card connector of a kth backplane area is separately connected to all service board connectors of the kth backplane area by using a PCB backplane in which the kth backplane area is located; each fabric card connector in a kth backplane extension area corresponding to the kth backplane area is connected to all service board connectors of all other backplane extension areas by using a low-dielectric-loss transmission material; each service board connector of the kth backplane extension area is connected to all fabric card connectors of all the other backplane extension areas by using the low-dielectric-loss transmission material. In this way, service boards and fabric cards on a same PCB backplane can perform intra-group communication by means of internal cabling; service boards and fabric cards on different PCB backplanes can perform inter-group communication by using a high-speed cable, and moreover, only two hops are needed to complete communication from a service board on one PCB backplane to a service board on another PCB backplane. Therefore, the interconnection system provided by the present invention is a point-to-point interconnection system having a high integration level, a high speed, high bandwidth, and a capability of flexible extension.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a sectional side view of a first example of an interconnection system for a communications device according to an embodiment of the present invention;
FIG. 2 is a sectional rear view of the first example of the interconnection system for a communications device according to an embodiment of the present invention;
FIG. 3 is a sectional rear view of a second example of an interconnection system for a communications device according to an embodiment of the present invention;
FIG. 4 is a sectional rear view of a third example of an interconnection system for a communications device according to an embodiment of the present invention; and
FIG. 5 is a sectional rear view of a fourth example of an interconnection system for a communications device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Generally, a communications device, such as a network server, may include a chassis, a fabric card, a service board, a backplane and a cable, where the chassis may be a cuboid and is used to contain the fabric card, the service board, the backplane and the cable. The chassis generally includes left-side and right-side wall plates, a top plate, a bottom plate and a rear wall plate, and a front wall plate may also be disposed according to a specific need, where the top plate and the bottom plate may be perpendicularly connected to or integrally formed with the left-side and right-side wall plates, and the rear wall plate is connected to the left-side and right-side wall plates, the top plate, and the bottom plate by using fasteners. The chassis formed in this manner provides mounting space for components such as the fabric card, the service board, the backplane, and the cable in the chassis, and provides structural support. In the communications device such as the network server, the backplane is used to connect the fabric card and the service board, is generally vertically inserted in the chassis, and may be located at a middle portion or middle-to-rear portion of the chassis. A connection slot or a connection port is mounted on the backplane. The fabric card and the service board are connected to the backplane by using the connection slot or a connector. Conventionally, the fabric card and the service board are inserted from a front side of the chassis and connected to a front side of the backplane, but the cable is led out from a rear side of the backplane and interconnects the fabric card and the service board. The fabric card described herein generally refers to a central switching unit of a system and is used to implement data exchange between service boards, and the service board generally refers to another board except the switching board in the system and is mainly used for service processing or interface processing. In the embodiments of the present invention, for ease of description, the fabric card and the service board are differentiated in terms of functions, but physical properties such as structures and shapes of the fabric card and the service board are not limited. Generally, the communications device uses a design of single-sided front horizontal insertion, that is, the fabric card and the service board are parallel to the top plate, and the fabric card and the service board are perpendicularly inserted into the backplane that is parallel to the rear wall plate. Communications devices shown in the embodiments of the present invention all use the design of single-sided front horizontal insertion.

In the embodiments of the present invention, the terminology "front side" in this specification refers to one side, of the backplane, on which the fabric card and the service board are inserted, and the terminology "rear side" in this specification refers to one side opposite to the "front side", that is, one side on which no fabric card or service board is inserted, and is one side close to the rear wall plate in the design of single-sided front horizontal insertion. The terminology "horizontal" in this specification is used to indicate a direction parallel to a placement plane when the chassis is placed on the plane, and the terminology "vertical" in this specification is used to indicate a direction perpendicular to the placement plane. The terminology "top" in this specification refers to one side, of the chassis, away from the chassis placement plane in a vertical direction, and the terminology "bottom" in this specification refers to one side, of the chassis, close to the chassis placement plane. The terminology "left side" in this specification refers to a left side when the rear wall plate of the chassis placed on the plane is faced, and the terminology "right side" in this specification refers to a right side in this case. The terminology "parallel" in this specification is used to indicate that two components are substantially parallel, it is not limited that the two components are absolutely parallel, and an error may exist between the two components or an angle may be formed between the two components as long as there is space between the two components. The terminology "perpendicular" in this specification is used to indicate that two components are basically perpendicular, and it is not limited that the two components intersect at absolute 90 degrees, and an acceptable error may be allowed.

An interconnection system for a communications device provided by an embodiment of the present invention includes M backplane areas and N backplane extension areas. The M backplane areas are distributed on K printed circuit board (Printed Circuit Board, PCB) backplanes; herein, M is a positive integer greater than or equal to 2, and K is a positive integer less than or equal to M. For example, physically, there may be one PCB backplane, and the M backplane areas are all distributed on this PCB backplane; there may be M PCB backplanes, and one backplane area is distributed on each PCB backplane; or a value of K may be determined according to a restriction of a PCB backplane size and a quantity of backplane areas.

A kth backplane area is any backplane area of the M backplane areas. The kth backplane area satisfies the following conditions: the kth backplane area includes at least one fabric card connector and at least one service board connector, the at least one fabric card connector of the kth backplane area is configured to be connected to a kth group of fabric cards, the at least one service board connector of the kth backplane area is configured to be connected to a kth group of service boards, and each fabric card connector of the kth backplane area is separately connected to all service board connectors of the kth backplane area by means of internal cabling of a PCB backplane in which the kth backplane area is located. The kth backplane area is any backplane area of the M backplane areas, that is, all backplane areas of the M backplane areas satisfy the foregoing conditions for the kth backplane area.

A kth backplane extension area corresponding to the kth backplane area satisfies the following conditions: the kth backplane extension area corresponding to the kth backplane area includes at least one fabric card connector, at least one service board connector, and a low-dielectric-loss transmission material, where the at least one fabric card connector in the kth backplane extension area is configured to be connected to the kth group of fabric cards, and the at least one service board connector in the kth backplane extension area is configured to be connected to the kth group of service boards. Because the kth backplane area corresponding to the kth backplane extension area is any backplane area of the M backplane areas, any backplane extension area of the M backplane extension areas should also satisfy the foregoing conditions that the kth backplane extension area satisfies. In other words, each backplane extension area of the M backplane extension areas satisfies the conditions that the kth backplane extension area satisfies.

That is to say, intra-group interconnection of each group of fabric cards and each group of service boards is implemented in backplane areas by using a PCB backplane. Each group of service boards are connected, in an insertion manner, to service board connectors of a corresponding backplane area and service board connectors of a corresponding backplane extension area, and each group of fabric cards are connected, in an insertion manner, to fabric card connectors of a corresponding backplane area and fabric card connectors of a corresponding backplane extension area. It should be noted that each group of fabric cards at least include one fabric card, and each group of service boards at least include one service board.

Each fabric card connector in the kth backplane extension area is connected to all service board connectors of all other backplane extension areas by using the low-dielectric-loss transmission material; each service board connector in the kth backplane extension area is connected to all fabric card connectors of all the other backplane extension areas by using the low-dielectric-loss transmission material. The low-dielectric-loss transmission material herein may be a high-speed cable or an optical fiber, and the like. For example, a cable made of a low-dielectric-loss material that can support high-speed long-distance transmission may be a copper-core cable, an optical fiber, or another cable used for data transmission and made of a high-speed and low-dielectric-loss material. k is a positive integer less than or equal to M.

Therefore, inter-group interconnection between one group of fabric cards and another group of service boards can be implemented by using a backplane extension area.

For any two group of service boards, for example, for a service board k-a in the kth group of service boards and a service board 1-b in a 1st group of service boards, the service board k-a in the kth group of service boards may first be connected to a fabric card k-m in the kth group of fabric cards through the kth backplane area, and the fabric card k-m in the kth group of fabric cards is connected to the service board 1-b in the 1st group of service boards through the kth backplane extension area, so that interconnection between the service board k-a in the kth group of service boards and the service board l-b in the 1st group of service boards is implemented by using two hops, where k and l are both less than M.

Further, the backplane extension area may further include a mechanical part configured to fasten the high-speed cable.

Optionally, all fabric card connectors of the kth backplane extension area and all service board connectors of the kth backplane extension area may be fastened on a PCB backplane. A manner of fastening may be directly perforating the PCB backplane and fastening each fabric card connector or service board connector at an opening, or may be fastening each fabric card connector or service board connector on the PCB backplane by using a metal or plastic mechanical part, and the present invention is not limited thereto. For ease of wiring, all the fabric card connectors and all the service board connectors of the kth backplane extension area may be fastened on the PCB backplane in which the kth backplane area is located.

Optionally, all the fabric card connectors and all the service board connectors of the kth backplane extension area may also be fastened on a metal or plastic mechanical part.

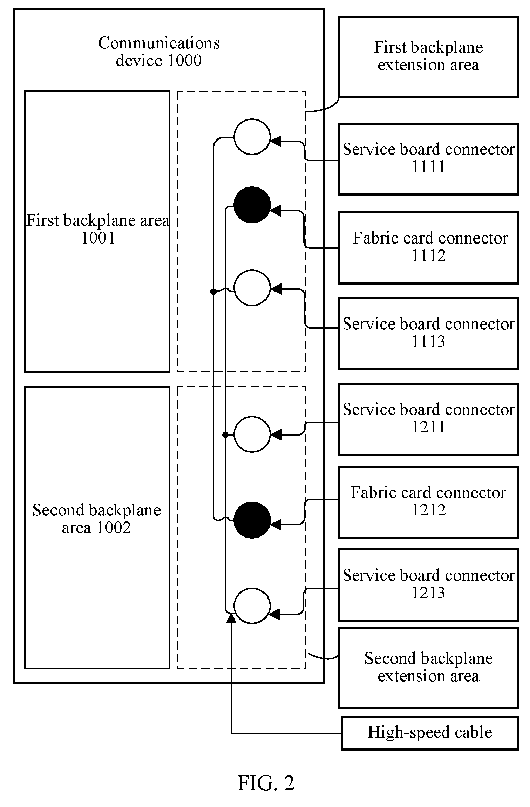

Optionally, as an embodiment, the kth backplane extension area may be located on a left side or right side of the kth backplane area. A communications device 1000 shown in FIG. 2 is a specific embodiment of this embodiment. In the embodiment shown in FIG. 2, M is equal to 2, N is equal to 2, and backplane extension areas are both located on a right side of a backplane area.

Optionally, as another embodiment, the kth backplane extension area may be divided into P backplane extension subareas, a fabric card connector in each backplane extension subarea is a subset of the fabric card connectors of the backplane extension area, a service board connector in each backplane extension subarea is a subset of the service board connectors of the backplane extension area, the fabric card connector in each backplane extension subarea has no intersection with fabric card connectors of other backplane extension subareas, and the service board connector in each backplane extension subarea has no intersection with service board connectors of the other backplane extension subareas. The P backplane extension subareas are separately located on two sides of the kth backplane area, that is, some backplane extension subareas of the P backplane extension subareas are located on the left side of the kth backplane area, and the other backplane subareas of the P backplane extension subareas are located on the right side of the kth backplane area. P is a positive integer greater than 1. Obviously, P cannot be greater than a quantity of fabric card connectors in the kth backplane extension area, and P cannot be greater than a quantity of service board connectors in the kth backplane extension area either.

Optionally, as another embodiment, the kth backplane area is divided into Q sub-backplanes, a fabric card connector in each backplane subarea is a subset of the fabric card connectors of the backplane area, a service board connector in each sub-backplane is a subset of the service board connectors of the backplane area, the fabric card connector in each backplane subarea has no intersection with fabric card connectors of other backplane subareas, and the service board connector in each backplane subarea has no intersection with service board connectors of the other backplane subareas. The Q backplane subareas are separately located on two sides of the kth backplane extension area, that is, some backplane subareas of the Q backplane subareas are located on a left side of the kth backplane extension area, and the other backplane subareas of the Q backplane subareas are located on a right side of the kth backplane area. Q is a positive integer greater than 1. Obviously, Q cannot be greater than a quantity of fabric card connectors in the kth backplane area, and Q cannot be greater than a quantity of service board connectors in the kth backplane area either.

Optionally, as another embodiment, the kth backplane extension area may be divided into P backplane extension subareas, a fabric card connector in each backplane extension subarea is a subset of the fabric card connectors of the backplane extension area, a service board connector in each backplane extension subarea is a subset of the service board connectors of the backplane extension area, the fabric card connector in each backplane extension subarea has no intersection with fabric card connectors of other backplane extension subareas, and the service board connector in each backplane extension subarea has no intersection with service board connectors of the other backplane extension subareas. The kth backplane area is divided into Q sub-backplanes, a fabric card connector in each backplane subarea is a subset of the fabric card connectors of the backplane area, a service board connector in each sub-backplane is a subset of the service board connectors of the backplane area, the fabric card connector in each backplane subarea has no intersection with fabric card connectors of other backplane subareas, and the service board connector in each backplane subarea has no intersection with service board connectors of the other backplane subareas. A pth backplane extension subarea is located on a left side or right side of a qth backplane subarea. P and Q are both positive integers greater than 1. Obviously, P cannot be greater than a quantity of fabric card connectors in the kth backplane extension area, and P cannot be greater than a quantity of service board connectors in the kth backplane extension area either; Q cannot be greater than a quantity of fabric card connectors in the kth backplane area, and Q cannot be greater than a quantity of service board connectors in the kth backplane area either; p is any positive integer less than or equal to P, and q is any positive integer less than or equal to Q.

It may be understood that, in addition to the foregoing embodiments, a position relationship between each backplane area and each backplane extension area is not limited to the content disclosed by the foregoing embodiments. All changes of the position relationship between each backplane and each backplane extension area readily figured out by a person skilled in the art within the technical scope disclosed in the present invention can be considered as equivalent changes of the present invention.

Point-to-point connection and communication exist between a fabric card and a service board inside the interconnection system for a communications device provided by the present invention, and therefore a communication link is short and a delay is small. The system is divided into a backplane area and a backplane extension area by means of partitioning, and the backplane extension area enhances configuration flexibility and extensibility of the system. Inside the system, PCB backplanes are grouped into multiple backplane areas, so as to miniaturize each group of PCB backplanes and reduce manufacturing costs of the PCB backplanes. Moreover, because the PCB backplanes become smaller, a transmission rate of internal cabling of the PCB backplanes is improved. When point-to-point interconnection of the system is implemented, an outgoing bottleneck at an interconnecting fabric card panel between subracks of a conventional communication system is solved; moreover, a quantity of fabric cards, a quantity of network chips, and a quantity of drives are reduced, and the cost of the whole system is low. In the system, point-to-point interconnection between a fabric card and a service board that belong to different backplane areas is implemented by using a high-density and low-dielectric-loss transmission dielectric material. In addition, by using a feature of the low-dielectric-loss transmission dielectric material, that is, support of long-distance and high-speed transmission, the quantities of PCB backplanes, fabric cards and service boards in the system can be extended, thereby improving the extensibility and integration level of the system. In sum, the interconnection system for a communications device provided by the present invention is a point-to-point interconnection system having a high integration level, a high speed, high bandwidth, and a capability of flexible extension.

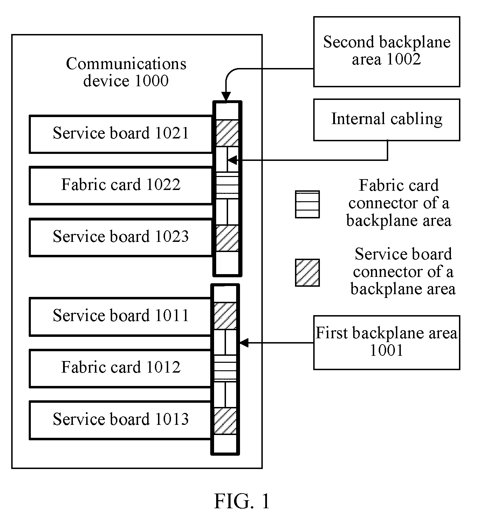

The present invention is described with reference to the specific embodiments in the following. It may be understood that the embodiments in FIG. 1 to FIG. 5 are only used to help a person skilled in the art to better understand the present invention, but are not intended to limit the present invention.

FIG. 1 is a sectional side view of a first example of an interconnection system for a communications device according to an embodiment of the present invention. An interconnection system for a communications device 1000 includes two backplane areas, where each backplane area is separately on one PCB backplane, and connected to two backplane extension areas. The two backplanes are a first backplane area 1001 and a second backplane area 1002, and two PCB backplanes are a first PCB backplane 1001' and a second PCB backplane 1002'.

The first backplane area 1001 is connected to a first group of fabric cards by using one fabric card connector, where the first group of fabric cards includes one fabric card, that is, a fabric card 1012.

The first backplane area 1001 is connected to a first group of service boards by using two service board connectors, where the first group of service boards includes two service boards, that is, a service board 1011 and a service board 1013.

A service board connector used for connection with the service board 1011 is connected to a fabric card connector used for connection with the fabric card 1012 by means of internal cabling of the first PCB backplane 1001', and a connector used for connection with the service board 1013 is connected to a connector used for connection with the fabric card 1012 by means of the internal cabling of the first PCB backplane 1001'. In this way, the first group of service boards and the first group of fabric cards can perform intra-group communication through the internal cabling of the first PCB backplane 1001'.

Similarly, the second backplane area 1002 is connected to a second group of fabric cards by using one fabric card connector, where the second group of fabric cards includes one fabric card, that is, a fabric card 1022. The second backplane area 1002 is connected to a second group of service boards by using two service board connectors, where the second group of service boards includes two service boards, that is, a service board 1021 and a service board 1023. A service board connector used for connection with the service board 1021 is connected to a fabric card connector used for connection with the fabric card 1022 by means of internal cabling of the second PCB backplane 1002', and a service board connector used for connection with the service board 1023 is connected to the fabric card connector used for connection with the fabric card 1022 through the internal cabling of the second PCB backplane 1002'.

One fabric card connector of a first backplane extension area is connected to the first group of fabric cards, that is, connected to the fabric card 1012, and two service board connectors of the first backplane extension area are connected to the first group of service boards, that is, connected to the service board 1011 and the service board 1013. One fabric card connector of a second backplane extension area is connected to the second group of fabric cards, that is, connected to the fabric card 1022, and two service board connectors of the second backplane extension area are connected to the second group of service boards, that is, connected to the service board 1021 and the service board 1023. The fabric card connector, used for connection with the first group of fabric cards, in the first backplane extension area is connected to the service board connectors, used for connection with the second group of service boards, in the second backplane extension area by using a high-speed cable. Correspondingly, the fabric card connector, used for connection with the second group of fabric cards, in the second backplane extension area is connected to the service board connectors, used for connection with the first group of service boards, in the first backplane extension area by using a high-speed cable. A specific connection relationship between the fabric card connectors and the service board connectors in the backplane extension areas is shown in FIG. 2.

FIG. 2 is a sectional rear view of the first example of the interconnection system for a communications device according to an embodiment of the present invention.

FIG. 2 specifically shows a connection relationship between the service board connectors and the fabric card connectors in the first backplane extension area and the second backplane extension area. In FIG. 2, the fabric card connector of the first backplane extension area includes a fabric card connector 1112, and the service board connectors of the first backplane extension area include a service board connector 1111 and a service board connector 1113; the fabric card connector of the second backplane extension area includes a fabric card connector 1212, and the service board connectors of the second backplane extension area include a service board connector 1211 and a service board connector 1213. The fabric card connector 1112 in the first backplane extension area is separately connected to the service board connector 1211 and the service board connector 1213 in the second backplane extension area by using a high-speed cable. The fabric card connector 1212 in the second backplane extension area is separately connected to the service board connector 1111 and the service board connector 1113 in the first backplane extension area by using a high-speed cable.

With reference to FIG. 1 and FIG. 2, the fabric card connector 1112 is configured to be connected to the first group of fabric cards, that is, connected to the fabric card 1012, and the service board connector 1111 and service board connector 1113 are configured to be connected to the service boards 1011 and 1013 in the first group of service boards respectively. The fabric card connector 1212 is configured to be connected to the second group of fabric cards, that is, connected to the fabric card 1022, and the service board connector 1211 and service board connector 1213 are configured to be connected to the service board 1021 and the service board 1023 in the second group of service boards respectively.

In this way, if any service board in the first group of service boards needs to communicate with any service board in the second group of service boards, communication may be performed only through a path from the first group of service boards to the first group of fabric cards and then to the second group of service boards. Each group of service boards are connected to form a point-to-point interconnection system by using the fabric cards, and only two hops are needed to complete communication from one group of service boards to another group of service boards, which is easy and flexible and improves the extensibility and integration level of the communications device. Moreover, the backplane extension areas may use modular design, and different modules are designed according to different quantities of supported signal links and cross connection groups, different rates supported, different bandwidth supported, and the like. In this way, different requirements for bandwidth, rates and costs in different application scenarios can be satisfied. In addition, the backplane extension area may also be fastened on a corresponding PCB backplane. By using FIG. 2 as an example, the first backplane extension area (including the fabric card connector 1112, the service board connector 1111 and the service board connector 1113) may be fastened on the first PCB backplane 1001', and the second backplane extension area (including the fabric card connector 1212, the service board connector 1211 and the service board connector 1213) may be fastened on the second PCB backplane 1002'.

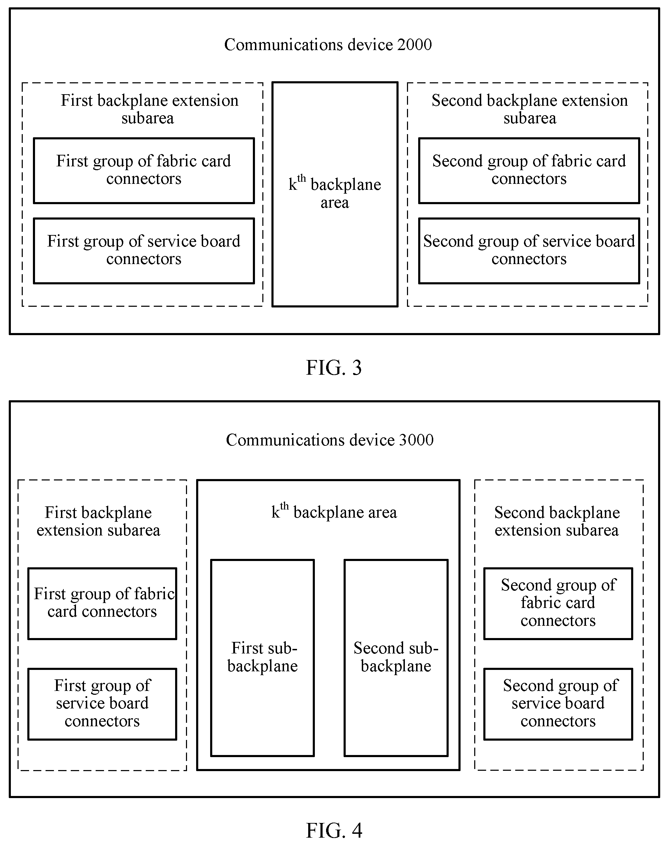

FIG. 3 is a sectional rear view of a second example of an interconnection system for a communications device according to an embodiment of the present invention. A communications device 2000 shown in FIG. 3 includes M backplane areas, where M is a positive integer. FIG. 3 merely shows a sectional view of a kth backplane in the M backplane areas and a kth backplane extension area, and the kth backplane area is any PCB backplane area in the M backplane areas.

In the communications device 2000 shown in FIG. 3, the kth backplane extension area used to be connected to a kth group of fabric cards is divided into a first backplane extension subarea and a second backplane extension subarea. The first backplane extension subarea includes a first group of fabric card connectors and a first group of service board connectors, and the second backplane extension subarea includes a second group of fabric card connectors and a second group of service board connectors. The first backplane extension subarea and the second backplane extension subarea are separately located on a left side and a right side of the kth backplane area.

The fabric card connector in the kth backplane extension area may be connected to service board connectors in all other backplane extension areas by using a high-speed cable, and the service board connector in the kth backplane extension area may also be connected to fabric card connectors in all the other backplane extension areas by using a high-speed cable. To be specific, the first group of fabric card connectors and the second group of fabric card connectors may be connected to the service board connectors in all the other backplane extension areas by using a high-speed cable. The first group of service board connectors and the second group of service board connectors may also be connected to the fabric card connectors in all the other backplane extension areas by using a high-speed cable.

FIG. 4 is a sectional rear view of a third example of an interconnection system for a communications device according to an embodiment of the present invention. FIG. 4 is a sectional rear view of a second example of an interconnection system for a communications device according to an embodiment of the present invention. A communications device 3000 shown in FIG. 4 includes M backplane areas, where M is a positive integer. FIG. 4 merely shows a screenshot of a kth backplane area in the M backplane areas and a kth backplane extension area, and the kth backplane area is any backplane area in the M backplane areas.

In the communications device 3000 shown in FIG. 4, the kth backplane area is divided into two backplane subareas, that is, a first sub-backplane and a second sub-backplane. The kth backplane extension area is divided into two backplane extension subareas, that is, a first backplane extension subarea and a second backplane extension subarea, where the first backplane extension subarea includes a first group of fabric card connectors and a first group of service board connectors, and the second backplane extension subarea includes a second group of fabric card connectors and a second group of service board connectors. The first backplane extension subarea is located on a left side of the first backplane subarea, and the second backplane extension subarea is located on a right side of the second backplane subarea.

The fabric card connector in the kth backplane extension area may be connected to service board connectors in all other backplane extension areas by using a high-speed cable, and the service board connector in the kth backplane extension area may also be connected to fabric card connectors in all the other backplane extension areas by using a high-speed cable. To be specific, the first group of fabric card connectors and the second group of fabric card connectors may be connected to the service board connectors in all the other backplane extension areas by using a high-speed cable. The first group of service board connectors and the second group of service board connectors may also be connected to the fabric card connectors in all the other backplane extension areas by using a high-speed cable.

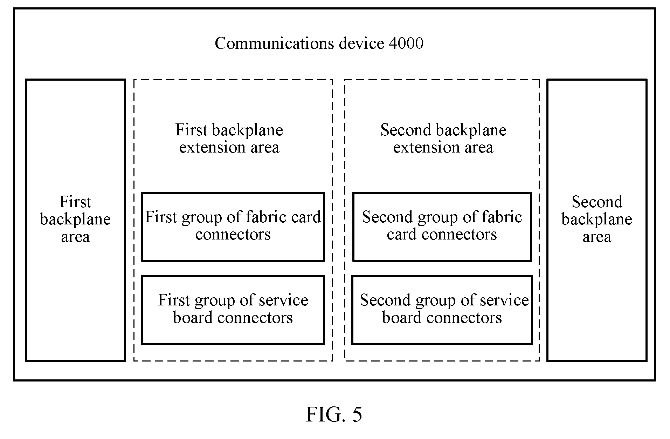

FIG. 5 is a sectional rear view of a fourth example of an interconnection system for a communications device according to an embodiment of the present invention.

As shown in FIG. 5, a communications device 4000 includes two backplane areas. A first backplane extension area is located on a right side of a first backplane area, and is configured to be connected to a first group of fabric cards and a first group of service boards that are corresponding to the first backplane area. A second backplane extension area is located on a left side of a second backplane area, and is configured to be connected to a second group of fabric cards and a second group of service boards that are corresponding to the second backplane area. A fabric card connector in the first backplane extension area is connected to a service board connector in the second backplane extension area by using a high-speed cable, and a fabric card connector in the second backplane extension area is connected to a service board connector in the first backplane extension area by using a high-speed cable.

It may be understood that the embodiments in FIG. 1 to FIG. 5 are only used to help a person skilled in the art to better understand the present invention, but are not intended to limit the present invention. Therefore, a quantity of backplane extension areas, a quantity of backplane areas, a quantity of PCB backplanes and quantities of fabric cards and service boards in the communications devices shown in the embodiments in FIG. 1 to FIG. 5 are only used for ease of description, but are not intended to limit the present invention. A person skilled in the art should understand that, in the communications devices, the quantities of fabric cards and service boards, the quantity of backplane areas, the quantity of PCB backplanes, and the quantity of backplane extension areas corresponding to the backplane areas may be set according to needs.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An interconnection system for a communications device, wherein the interconnection system comprises M backplane areas and N backplane extension areas;
the M backplane areas are distributed on K printed circuit board PCB backplanes, a k^{th} backplane area comprises at least one fabric card connector and at least one service board connector, and the k^{th} backplane area is any backplane area of the M backplane areas, wherein:
the at least one fabric card connector of the k^{th} backplane area is configured to be connected to a k^{th} group of fabric cards, and the at least one service board connector of the k^{th} backplane area is configured to be connected to a k^{th} group of service boards;
each fabric card connector of the k^{th} backplane area is separately connected to all service board connectors of the k^{th} backplane area by using a PCB backplane in which the k^{th} backplane area is located; and
a k^{th} backplane extension area corresponding to the k^{th} backplane area comprises at least one fabric card connector, at least one service board connector, and a low-dielectric-loss transmission material, wherein:
the at least one fabric card connector of the k^{th} backplane extension area is configured to be connected to the k^{th} group of fabric cards, and the at least one service board connector of the k^{th} backplane extension area is configured to be connected to the k^{th} group of service boards;
each fabric card connector of the k^{th} backplane extension area is connected to all service board connectors of all other backplane extension areas by using the low-dielectric-loss transmission material; and
each service board connector of the k^{th} backplane extension area is connected to all fabric card connectors of all the other backplane extension areas by using the low-dielectric-loss transmission material;
M is a positive integer greater than or equal to 2, k is any positive integer less than or equal to M, N is a positive integer greater than or equal to M, K is a positive integer less than or equal to M, each group of fabric cards at least comprises one fabric card, and each group of service boards at least comprises one service board.

2. The interconnection system according to claim 1, wherein all fabric card connectors and all service board connectors of the k^{th} backplane extension area are fastened on any PCB backplane.

3. The interconnection system according to claim 1, wherein all fabric card connectors and all service board connectors of the k^{th} backplane extension area are fastened on the PCB backplane in which the k^{th} backplane area is located.

4. The interconnection system according to claim 1, wherein all fabric card connectors and all service board connectors of the k^{th} backplane extension area are fastened on a mechanical part.

5. The interconnection system according to any one of claims 1 to 4, wherein
the k^{th} backplane extension area is located on a left side or right side of the k^{th} backplane area.

6. The interconnection system according to any one of claims 1 to 4, wherein
the k^{th} backplane extension area is at least divided into P backplane extension subareas, and the P backplane extension subareas are separately located at two sides of the k^{th} backplane area, wherein P is a positive integer greater than 1.

7. The interconnection system according to any one of claims 1 to 4, wherein
the k^{th} backplane area is at least divided into Q backplane subareas, and the Q backplane subareas are separately located at two sides of the k^{th} backplane extension area, wherein Q is a positive integer greater than 1.

8. The interconnection system according to any one of claims 1 to 4, wherein
the k^{th} backplane extension area is at least divided into P backplane extension subareas, and the k^{th} backplane area is divided into at least Q backplane subareas; and
a p^{th} backplane extension subarea is located on a left side or right side of a q^{th} backplane subarea;
P and Q are both positive integers greater than 1, p is any positive integer less than or equal to P, and q is any positive integer less than or equal to Q.

9. The interconnection system according to any one of claims 1 to 8, wherein
the low-dielectric-loss transmission material is a cable or an optical fiber.
